# EUROPÄISCHE PATENTSCHRIFT

(11) **EP 3 520 202 B1**
(45) Veröffentlichungstag und Bekanntmachung des Hinweises auf die Patenterteilung: **22.07.2020**
(21) Anmeldenummer: 17754715.5
(22) Anmeldetag: 18.08.2017
(51) Int. Cl.: H02K 3/12, H02K 3/28

(54) **STATOR FÜR EINE ELEKTRISCHE MASCHINE**
STATOR FOR AN ELECTRICAL MACHINE
STATOR POUR UNE MACHINE ELECTRIQUE

(30) Priorität: 27.09.2016 DE 102016218619; 23.05.2017 DE 102017208706
(43) Veröffentlichungstag der Anmeldung: 07.08.2019
(73) Patentinhaber: Robert Bosch GmbH, 70442 Stuttgart (DE)
(72) Erfinder: FRUEHAUF, Patrick, Shanghai 201206 (CN); KUDLEK, Alexander, 31199 Diekholzen (DE); RIEDL, Johannes, 81369 Muenchen (DE)
(86) Internationale Anmeldenummer: PCT/EP2017/070975
(87) Internationale Veröffentlichungsnummer: WO 2018/059831

(56) Entgegenhaltungen:
- US-A1- 2008 042 508
- US-A1- 2015 091 408

## Beschreibung

### Stand der Technik

Die Erfindung geht aus von einem Stator für eine elektrische Maschine nach der Gattung des Hauptanspruchs.

Es ist schon ein Stator für eine elektrische Maschine aus der JP2014007795 A oder DE 103 31 841 A1 gemäß dem Oberbegriff des Anspruchs 1 bekannt, welcher eine als Steckwicklung ausgebildete Mehrphasenwicklung trägt, deren Wicklungsstränge durch Nuten des Stators verlaufen und mehrere unterschiedliche Leiterelemente umfassen. Zumindest einige dieser Leiterelemente weisen jeweils zwei Leiterschenkel und jeweils einen die zwei Leiterschenkel verbindenden Verbindungsleiter auf, wobei in jeder Nut eine geradzahlige Anzahl von n Leiterschenkeln in radialer Richtung bezüglich einer Statorachse übereinander angeordnet ist. Jeder Leiterschenkel eines der Leiterelemente ist in seiner Nut in einer bestimmten Lage bezüglich eines Nutgrundes der Nut vorgesehen. Die Leiterelemente liegen derart in den Nuten, dass alle Verbindungsleiter auf derselben Stirnseite des Stators liegen. Außerdem sind die den Verbindungsleitern abgewandten Enden der Leiterschenkel zur Bildung der Mehrphasenwicklung miteinander verbunden.

Diese Mehrphasenwicklungen umfassen häufig eine vergleichsweise große Anzahl von unterschiedlichen Leiterelementen, insbesondere sogenannte Sonderverbinder, die von den Standard-Leiterelementen abweichen. Diese Sonderverbinder erhöhen die Herstellungskosten.

Die US 2008 004 25 08 offenbart eine Stator-Mehrphasenwicklung mit Haarnadel-Leitern. Dabei liegen drei Haarnadeln nur in der obersten Nutposition und eine dreischenklige Haarnadel nur in der untersten Nutposition. Die beiden Haarnadeltypen haben eine unterschiedliche Nut-Schrittweite. Die dreischenklige Haarnadel verbindet die drei Phasen zum Sternpunkt.

### Vorteile der Erfindung

Der erfindungsgemäße Stator mit den kennzeichnenden Merkmalen des Hauptanspruchs hat demgegenüber den Vorteil, dass für die Mehrphasenwicklung weniger unterschiedliche Leiterelemente vorgesehen sind. Dies wird erreicht, indem jeder Wicklungsstrang in der untersten Lage liegende untere Leiterelemente und in der obersten Lage liegende obere Leiterelemente umfasst, wobei die unteren Leiterelemente jeweils in der gleichen Lage liegende Leiterschenkel und die oberen Leiterelemente jeweils in der gleichen Lage liegende Leiterschenkel aufweisen und wobei zwischen den Leiterschenkeln der einzelnen Leiterelemente jeweils eine bestimmte Schrittweite als Abstand vorgesehen ist, wobei die Schrittweite der unteren Leiterelemente gegenüber der Schrittweite der oberen Leiterelemente um den Wert eins verschieden ist.

Durch die in den Unteransprüchen aufgeführten Maßnahmen sind vorteilhafte Weiterbildungen und Verbesserungen des im Hauptanspruch angegebenen Stators möglich.

Nach einem ersten Ausführungsbeispiel der Mehrphasenwicklung ist zumindest in einem der Wicklungsstränge eine sich wiederholende Abfolge von einem der oberen Leiterelemente und einem der unteren Leiterelemente vorgesehen. In der einzelnen Abfolge folgt also jeweils auf ein einziges oberes Leiterelement ein einziges unteres Leiterelement oder umgekehrt. Auf diese Weise wird ein Stator erreicht, dessen Nuten jeweils zwei Leiterschenkel zweier Leiterelemente aufweisen.

Besonders vorteilhaft ist, wenn die unteren Leiterelemente jeweils zwei Enden aufweisen, die in die gleiche Umfangsrichtung abgewinkelt sind und die oberen Leiterelemente jeweils zwei Enden aufweisen, die in die gleiche Umfangsrichtung und entgegengesetzt zu den Enden der unteren Leiterelemente abgewinkelt sind. Auf diese Weise werden eine symmetrisch verteilte Wicklung und gleichförmig aufgebaute Wickelköpfe erreicht.

Weiterhin vorteilhaft ist, wenn die oberen Leiterelemente und die unteren Leiterelemente nach dem ersten Ausführungsbeispiel in dem jeweiligen Wicklungsstrang derart miteinander verbunden sind, dass eine sich wiederholende Abfolge von Leiterverbindungen unterschiedlicher Art entsteht, die zwei aufeinanderfolgende Leiterverbindungen einer ersten Art, eine Leiterverbindung einer zweiten Art und eine Leiterverbindung einer dritten Art umfasst, wobei die Leiterverbindung der ersten Art einen voreilenden Leiterschenkel eines der Leiterelemente mit einem nacheilenden Leiterschenkel eines der anderen Leiterelemente oder umgekehrt, die Leiterverbindung der zweiten Art einen voreilenden Leiterschenkel eines der Leiterelemente mit einem voreilenden Leiterschenkel eines der anderen Leiterelemente und die Leiterverbindung der dritten Art einen nacheilenden Schenkel eines der Leiterelemente mit einem nacheilenden Schenkel eines der anderen Leiterelemente verbindet. Die Reihenfolge dieser drei Arten von Leiterverbindungen innerhalb einer der Abfolgen ist beliebig, jedoch bleibt diese Reihenfolge in den folgenden sich wiederholenden Abfolgen gleich.

Sehr vorteilhaft ist es, wenn jeder Wicklungsstrang zwischen der untersten Lage und der obersten Lage liegende mittlere Leiterelemente umfasst, deren Leiterschenkel pro Leiterelement einen Lagensprung vom Wert eins ausführen, die eine Schrittweite haben, die der größeren der beiden Schrittweiten der oberen und unteren Leiterelemente entspricht und die zwei in entgegengesetzter Umfangsrichtung abgewinkelte Enden aufweisen. Auf diese Weise wird ein Stator erreicht, dessen Nuten jeweils eine geradzahlige Anzahl von Leiterschenkeln aufweisen, die größer als zwei ist und beispielweise vier, sechs oder acht beträgt. Auch vorteilhaft ist, wenn zumindest einer der Wicklungsstränge mittlere Leiterelemente umfasst, die in den Nuten zwischen der untersten Lage und der obersten Lage liegen, deren Leiterschenkel pro Leiterelement einen Lagensprung vom Wert eins ausführen und die eine Schrittweite haben, die der größeren der beiden Schrittweiten der oberen und unteren Leiterelementen entspricht.

Des Weiteren vorteilhaft ist, wenn die mittleren Leiterelemente zwei in entgegengesetzte Umfangsrichtung abgewinkelte Enden aufweisen.

Nach einem zweiten Ausführungsbeispiel der Mehrphasenwicklung ist in zumindest einem der Wicklungsstränge eine sich wiederholende Abfolge von einem der oberen Leiterelemente, einem oder mehreren der mittleren Leiterelemente und einem der unteren Leiterelemente und einem oder mehreren der mittleren Leiterelemente vorgesehen ist. Diese Abfolge kann auch in umgekehrter Reihenfolge der aufgeführten Leiterelemente vorgesehen sein. In der einzelnen Abfolge folgt also jeweils auf ein einziges oberes Leiterelement, ein einziges oder mehrere mittlere Leiterelemente, ein einziges unteres Leiterelement und anschließend eine oder mehrere der mittleren Leiterelemente, oder umgekehrt. Auf diese Weise wird ein Stator erreicht, dessen Nuten jeweils eine geradzahlige Anzahl von Leiterschenkeln aufweisen, die größer als zwei ist und beispielweise vier, sechs oder acht beträgt.

Vorteilhaft ist, wenn innerhalb eines der Magnetpole jeweils zwei benachbarte Nuten vorgesehen sind, die ausschließlich derselben elektrischen Phase zugeordnete Leiterschenkel umfassen und gleichphasige Nuten bilden, wobei nach dem zweiten Ausführungsbeispiel vorgesehen ist, dass zwei Leiterschenkel, die in benachbarten gleichphasigen Nuten in der untersten Lage angeordnet sind, Verbindungsleiter haben, die ausgehend von ihren Leiterschenkeln in dieselbe Richtung verlaufen, und dass zwei Leiterschenkel, die in benachbarten gleichphasigen Nuten in der obersten Lage angeordnet sind, Verbindungsleiter haben, die ausgehend von ihren Leiterschenkeln in entgegengesetzte Richtung verlaufen. Umgekehrt kann nach dem zweiten Ausführungsbeispiel auch vorgesehen sein, dass zwei Leiterschenkel, die in benachbarten gleichphasigen Nuten in der obersten Lage angeordnet sind, Verbindungsleiter haben, die ausgehend von ihren Leiterschenkeln in dieselbe Richtung verlaufen, und dass zwei Leiterschenkel, die in benachbarten gleichphasigen Nuten in der untersten Lage angeordnet sind, Verbindungsleiter haben, die ausgehend von ihren Leiterschenkeln in entgegengesetzte Richtung verlaufen.

Außerdem vorteilhaft ist, wenn pro elektrischer Phase ausschließlich ein Wicklungsstrang vorgesehen ist, der jeweils mit einem schlaufenförmigen ersten Strangabschnitt durch bestimmte Nuten des Stators verläuft und mit einem nachfolgenden schlaufenförmigen zweiten Strangabschnitt durch die zu den bestimmten Nuten benachbarten Nuten verläuft.

Alternativ können pro elektrischer Phase zwei Wicklungsstränge vorgesehen sein, die von ihren Phasenanschlüssen kommend in zwei benachbarten Nuten beginnen und in entgegengesetzter Umfangsrichtung bis zu einem Sternpunktanschluss verlaufen.

Darüber hinaus vorteilhaft ist, wenn zwischen den über eine Leiterverbindung verbundenen Leiterschenkeln jeweils die gleiche Schrittweite vorgesehen ist. Auf diese Weise ergibt sich auf der einen Stirnseite des Stators ein sehr gleichförmig aufgebauter Wickelkopf.

### Zeichnungen

Drei Ausführungsbeispiele der Erfindung sind in den Zeichnungen vereinfacht dargestellt und in der nachfolgenden Beschreibung näher erläutert.
- Fig.1: zeigt eine dreidimensionale Ansicht auf eine Stirnseite eines erfindungsgemäßen Stators,
- Fig.2: ein erstes Leiterelement der Mehrphasenwicklung nach Fig.1,
- Fig.3: ein zweites Leiterelement der Mehrphasenwicklung nach Fig.1,
- Fig.4: ein drittes Leiterelement der Mehrphasenwicklung nach Fig.1,
- Fig.5: einen Ausschnitt einer Draufsicht auf den Stator nach Fig.1, bei dem nur vier einzelne, in derselben Nut angeordnete Leiterelemente dargestellt sind,
- Fig.6: eine dreidimensionale Ansicht auf die andere Stirnseite des erfindungsgemäßen Stators nach Fig.1,
- Fig.7: ein Wickelschema nach einem ersten Ausführungsbeispiel der erfindungsgemäßen Mehrphasenwicklung,
- Fig.8: ein Wickelschema nach einem zweiten Ausführungsbeispiel der erfindungsgemäßen Mehrphasenwicklung und
- Fig.9: ein Wickelschema nach einem dritten Ausführungsbeispiel der erfindungsgemäßen Mehrphasenwicklung.

### Beschreibung der Ausführungsbeispiele

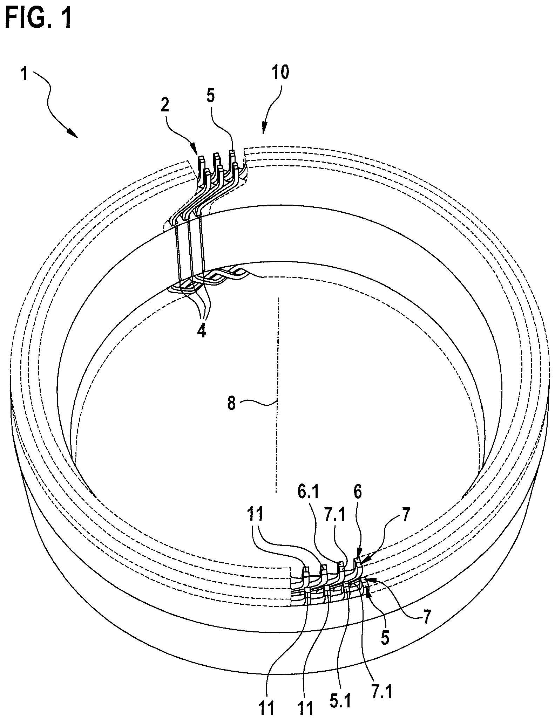

Fig.1 zeigt eine dreidimensionale Ansicht auf eine Stirnseite eines erfindungsgemäßen Stators mit beispielsweise vier Leitern pro Nut.

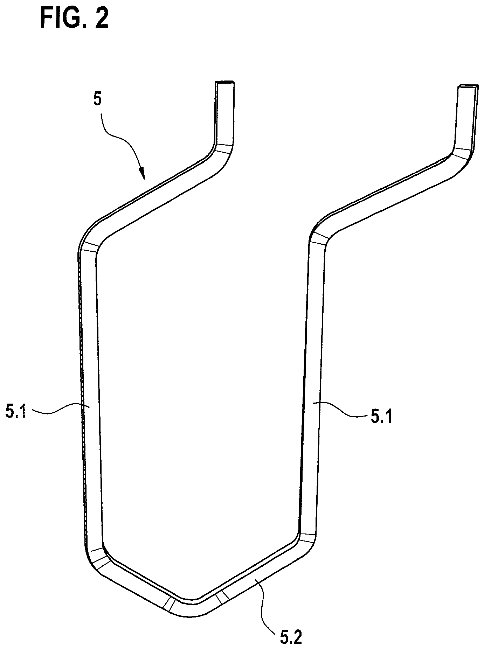

Der Stator 1 einer elektrischen Maschine weist eine als Steckwicklung ausgebildete Mehrphasenwicklung 2 auf, deren einzelne Wicklungsstränge 3 durch Nuten 4 des Stators 1 verlaufen und die mehrere unterschiedliche, elektrisch in Reihe geschaltete Leiterelemente 5,6,7 umfasst. Jeder Wicklungsstrang 3 der Mehrphasenwicklung 2 ist einer der elektrischen Phasen u,v,w der elektrischen Maschine zugeordnet. Dabei kann jeder Wicklungsstrang 3 in mehrere parallel verlaufende, elektrisch gegeneinander isolierte Teilstränge bzw. Wicklungszweige unterteilt sein. Die Mehrphasenwicklung 2 ist beispielsweise eine Dreiphasen- oder Sechsphasenwicklung. Zumindest einige, insbesondere eine Mehrzahl dieser Leiterelemente 5,6,7 sind nach Fig.2, Fig.3 und Fig.4 ausgebildet.

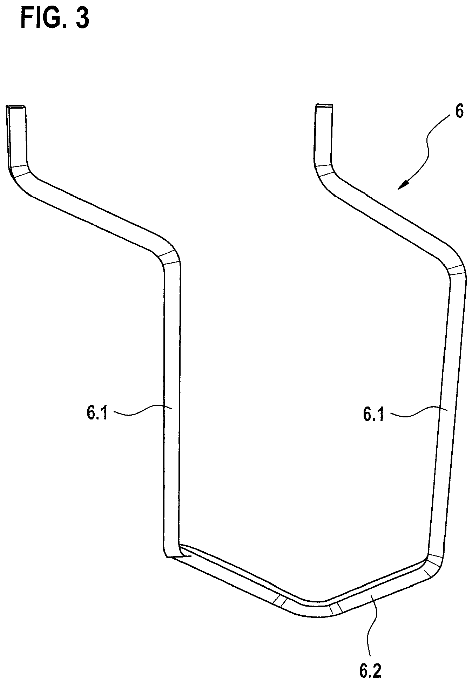

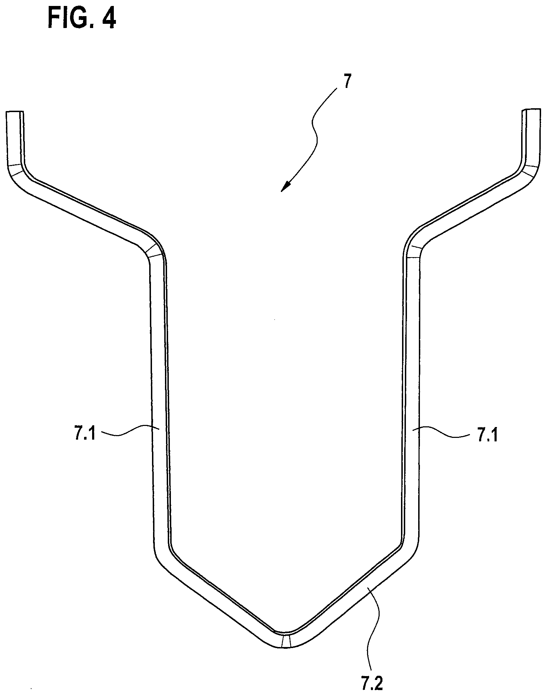

Fig.2 zeigt ein erstes Leiterelement 5, Fig.3 ein zweites Leiterelement 6 und Fig.4 ein drittes Leiterelement 7 der Steckwicklung 2 nach Fig.1. Die unterschiedlichen Leiterelemente 5,6,7 nach Fig.2 bis Fig.4 haben jeweils zwei Leiterschenkel 5.1,6.1,7.1 und jeweils einen die zwei Leiterschenkel 5.1,6.1,7.1 verbindenden Verbindungsleiter 5.2,6.2.7.2, der beispielsweise U-förmig oder V-förmig ausgebildet ist und zumindest eine dreidimensionale Biegung zur Umgehung anderer Verbindungsleiter 5.2,6.2.7.2 aufweisen kann. Die Leiterelemente 5,6,7 sind jeweils mit einer elektrisch isolierenden Lackschicht versehen. Der Querschnitt der Leiterelemente 5,6,7 ist beispielsweise rechteckförmig, kann aber auch einen viereckförmig, rund oder beliebig anders ausgeführt sein. Die Leiterelemente 5,6,7 können auch analog zu sogenannten Röbelstäben in mehrere parallele, voneinander elektrisch isolierte Teilleiterelemente aufgesplittet sein, die übereinandergestapelt das entsprechende Leiterelement 5,6,7 bilden und daher jeweils eine geringere Dicke aufweisen als das einstückige, nicht aufgesplittete Leiterelement 5,6,7. Beispielsweise kann ein Leiterelement 5,6,7 aus zwei geometrisch parallel verlaufenden Teilleiterelementen mit jeweils einem rechteckförmigen Querschnitt bestehen. Mit anderen Worten ausgedrückt kann der Querschnitt eines Wicklungsstrangs 3 aus mehreren geometrisch parallel verlaufenden, voneinander elektrisch isolierten Teilleiterelementen 5,6,7 gebildet sein. Diese Teilleiterelemente 5,6,7, insbesondere der oberen Leiterelemente 5, können jeweils von einer Nut 4 eines Magnetpols τₚ zur Nut 4 des nächsten Magnetpols τₚ die Lagen gegenseitig bzw. miteinander tauschen. Dies hat den technischen Effekt, dass die in den parallel geschalteten Teilleiterelementen induzierten Kreisströme eliminiert und die resultierenden Kupferverluste reduziert werden.

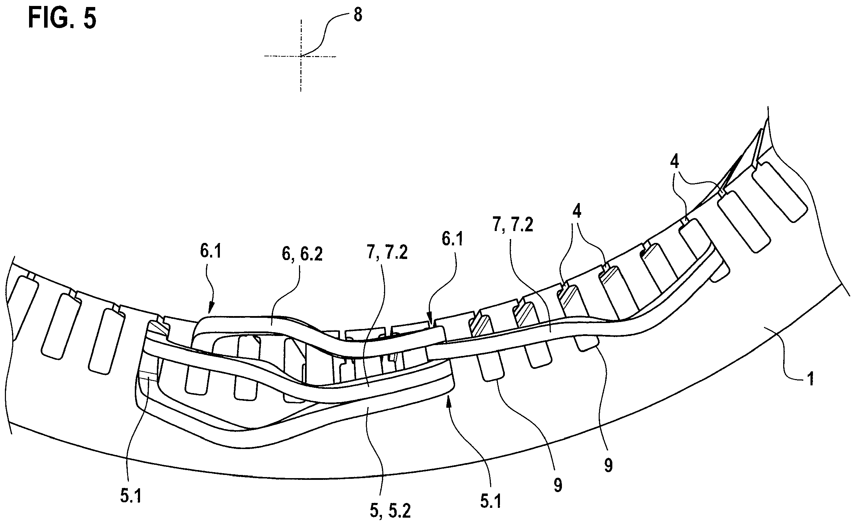

Fig.5 zeigt einen Ausschnitt einer Draufsicht auf den Stator nach Fig.1, bei dem nur vier einzelne, in derselben Nut 4 angeordnete Leiterelemente 5,6,7 der Steckwicklung 2 nach Fig.1 dargestellt sind.

In jeder Nut 4 des Stators 1 ist eine geradzahlige Anzahl von n Leiterschenkeln 5.1,6.1,7.1 in radialer Richtung bezüglich einer Statorachse 8 übereinander angeordnet, wobei jeder Leiterschenkel 5.1,6.1,7.1 eines der Leiterelemente 5,6,7 in seiner Nut 4 in einer bestimmten Lage bezüglich eines Nutgrundes 9 der Nut 4 vorgesehen ist. Das Leiterelement 5 ist mit beiden Leiterschenkeln 5.1 jeweils in der untersten, also bezüglich dem Nutgrund 9 ersten Lage angeordnet, wird im folgenden als unteres Leiterelement 5 bezeichnet und liegt am Nutgrund 9 bzw. ist dem Nutgrund 9 zugewandt. Das Leiterelement 6 liegt jeweils mit beiden Leiterschenkeln 6.1 in der obersten, nach dem Ausführungsbeispiel in der vom Nutgrund 9 aus gezählten vierten Lage und wird im folgenden als oberes Leiterelement 6 bezeichnet. Nach dem zweiten Ausführungsbeispiel sind in den Nuten 4 zwischen der untersten Lage und der obersten Lage, also nach Fig.5 in der zweiten und dritten Lage, jeweils die dritten Leiterelemente 7 angeordnet, die im folgenden als mittlere Leiterelemente 7 bezeichnet sind.

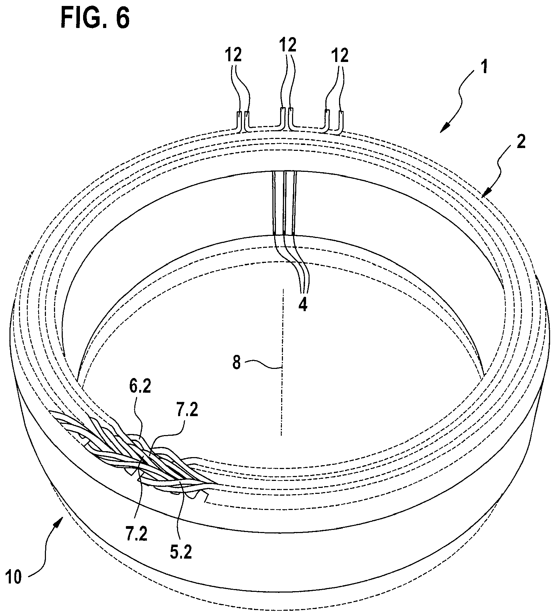

Fig.6 zeigt eine dreidimensionale Ansicht auf die andere Stirnseite des erfindungsgemäßen Stators nach Fig.1. Nach Fig.1 und Fig.6 liegen die Leiterelemente 5,6,7 derart in den Nuten 4, dass alle Verbindungsleiter 5.2,6.2,7.2 auf derselben Stirnseite des Stators 1 liegen. Dadurch liegen alle den Verbindungsleitern 5.2,6.2,7.2 abgewandten Enden der Leiterschenkel 5.1,6.1,7.1 auf der derselben anderen Stirnseite des Stators 1, die auch als Verbindungsseite 10 bezeichnet wird. Die den Verbindungsleitern 5.2,6.2,7.2 abgewandten Enden der Leiterschenkel 5.1,6.1,7.1 sind zur Bildung der Steckwicklung 2 stoffschlüssig miteinander verbunden, wobei jeweils zwei stoffschlüssig miteinander verbundene Leiterschenkel 5.1,6.1,7.1 eine Leiterverbindung 11 bilden.

Nach Fig.1 sind alle Leiterverbindungen 11, die jeweils eines der oberen Leiterelemente 6 mit einem der mittleren Leiterelemente 7 verbinden, auf einem ersten Kreis angeordnet, dessen Mittelpunkt auf der Statorachse 8 liegt. Ebenso sind alle Leiterverbindungen 11, die eines der unteren Leiterelemente 5 mit einem der mittleren Leiterelemente 7 verbinden, auf einem zweiten Kreis vorgesehen, dessen Mittelpunkt auf der Statorachse 8 liegt.

Die Wicklungsstränge 3 weisen Phasenanschlüsse 12 auf, die auf der den Verbindungsleitern 5.2,6.2,7.2 zugewandten Stirnseite des Stators 1 vorgesehen sind.

Zumindest einer der Wicklungsstränge 3 umfasst die der untersten Lage der jeweiligen Nut 4 liegenden unteren Leiterelemente 5 und die in der obersten Lage der jeweiligen Nut 4 liegenden oberen Leiterelemente 6. Die unteren Leiterelemente 5 liegen am Nutgrund 9 und damit in der untersten Lage.

Zwischen den Leiterschenkeln 5.1,6.1,7.1, die über einen Verbindungsleiter 5.2,6.2,7.2 oder eine Leiterverbindung 11 miteinander verbunden sind, ist jeweils eine bestimmte Schrittweite vorgesehen, die den Abstand zwischen den in den Nuten 4 befindlichen Abschnitten der Leiterschenkel 5.1,6.1,7.1 mit der Anzahl der im Stator 1 zu überwindenden Statorzähne bzw. mit der Anzahl der Nuten 4 angibt, die vom ersten Leiterschenkel zum zweiten Leiterschenkel weitergesprungen werden muss. Nach Fig.5 beträgt die Schrittweite der unteren Leiterelemente 5 und die Schrittweite der mittleren Leiterelemente 7 beispielsweise sechs Nuten und die Schrittweite der oberen Leiterelemente 6 beispielsweise fünf Nuten.

Erfindungsgemäß ist vorgesehen, dass die unteren Leiterelemente 5 jeweils in der gleichen Lage liegende Leiterschenkel 5.1 und die oberen Leiterelemente 6 jeweils in der gleichen Lage liegende Leiterschenkel 6.1 aufweisen, wobei die Schrittweite der unteren Leiterelemente 5 gegenüber der Schrittweite der oberen Leiterelemente 6 um den Wert eins verschieden, beispielsweise um den Wert eins größer oder kleiner ist.

Die unteren Leiterelemente 5 haben jeweils zwei Enden, die in die gleiche Umfangsrichtung abgewinkelt sind (Fig.2). Die oberen Leiterelemente 6 wiederum haben jeweils zwei Enden, die in die gleiche Umfangsrichtung und entgegengesetzt zu den Enden der unteren Leiterelemente 5 abgewinkelt sind (Fig.3). Wie aus Fig.5 ersichtlich liegen beide Leiterschenkel 5.1 der unteren Leiterelemente 5 jeweils in der untersten Lage am Nutgrund 9 ihrer Nut 4. Entsprechend liegen die beiden Leiterschenkel 6.1 der oberen Leiterelemente 6 jeweils in der obersten Lage ihrer Nut 4.

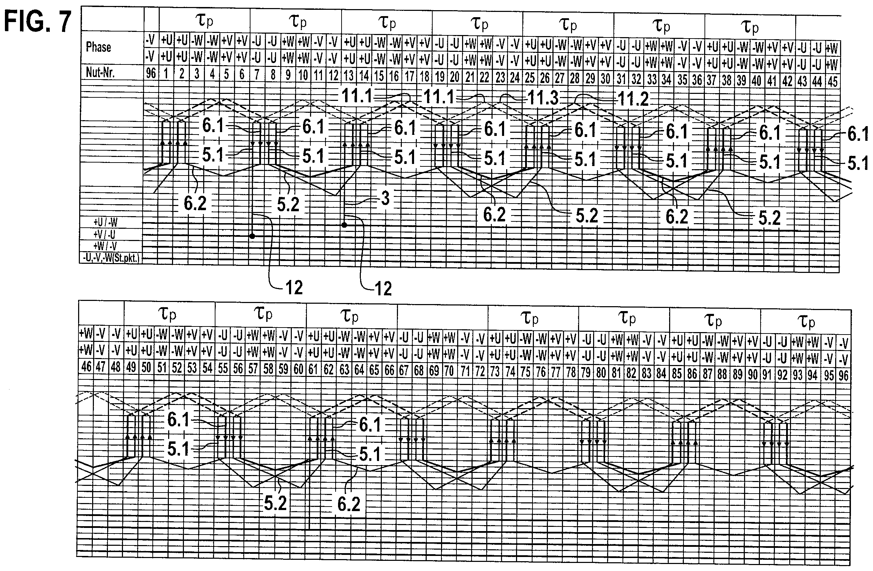

Fig.7 zeigt ein Wickelschema eines ersten Ausführungsbeispiels der erfindungsgemäßen Steckwicklung 2. In diesem Wickelschema ist der Verlauf eines der Wicklungsstränge 3 durch die Nuten 4 des Stators 1 dargestellt. Jede Spalte des Wickelschemas stellt eine Nut 4 des Stators 1 dar, die mit einer fortlaufenden Nummer versehen ist. Nach dem ersten Ausführungsbeispiel sind jeweils zwei Leiter bzw. Leiterschenkel 5.1,6.1 pro Nut 4 vorgesehen. Der jeweils in einer der Spalten ganz rechts angeordnete Leiterschenkel 5.1,6.1 befindet sich in der untersten Lage der Nut 4 und der jeweils in einer der Spalten ganz links angeordnete Leiterschenkel 5.1,6.1 befindet sich in der obersten Lage der Nut 4. Die auf der Verbindungsseite 10 außerhalb der Nuten 4 liegenden Abschnitte der Leiterschenkel 5.1,6.1 sind gestrichelt dargestellt.

Der Stator 1 hat mehrere Magnetpole τₚ, wobei jeder Magnetpol τₚ mehrere Nuten 4 umfasst und wobei innerhalb eines Magnetpols τₚ zwei benachbarte Nuten 4 vorgesehen sind, die ausschließlich derselben elektrischen Phase u,v,w, zugeordnete Leiterschenkel 5.1,6.1 enthält. Dies entspricht einer sogenannten Lochzahl q vom Wert gleich zwei.

Nach dem ersten Ausführungsbeispiel der Steckwicklung 2 ist zumindest einer der Wicklungsstränge 3 aus einer sich wiederholenden Abfolge von einem einzigen der unteren Leiterelemente 5 und einem einzigen der oberen Leiterelemente 6 oder umgekehrt gebildet. Das von einem seiner Phasenanschlüsse 12 aus gesehen erste oder letzte Leiterelement 5,6 eines der Wicklungsstränge 3 kann ein Sonder-Leiterelement sein, das gegenüber den Leiterelementen 5,6 nach Fig. 2 und Fig.3 unterschiedlich ausgebildet ist.

Wie aus der Fig.7 erkennbar, sind die oberen Leiterelemente 6 und die unteren Leiterelemente 5 in dem jeweiligen Wicklungsstrang 3 derart miteinander verbunden, dass eine sich wiederholende Abfolge von Leiterverbindungen unterschiedlicher Art entsteht, wobei jede Abfolge zwei aufeinanderfolgende Leiterverbindungen einer ersten Art, eine Leiterverbindung einer zweiten Art und eine Leiterverbindung einer dritten Art umfasst.

Die Leiterverbindung der ersten Art verbindet einen bezüglich einer bestimmten Umfangsrichtung voreilenden Leiterschenkel 6.1 eines der oberen Leiterelemente 6 mit einem nacheilenden Leiterschenkel 5.1 eines der unteren Leiterelemente 5. Umgekehrt kann die Leiterverbindung der ersten Art kann auch einen bezüglich einer bestimmten Umfangsrichtung voreilenden Leiterschenkel 5.1 eines der unteren Leiterelemente 5 mit einem nacheilenden Leiterschenkel 6.1 eines der oberen Leiterelemente 6 verbinden.

Die Leiterverbindung der zweiten Art verbindet einen voreilenden Leiterschenkel 5.1 eines der unteren Leiterelemente 5 mit einem voreilenden Leiterschenkel 6.1 eines der oberen Leiterelemente 6. Umgekehrt kann die Leiterverbindung der zweiten Art kann auch einen bezüglich einer bestimmten Umfangsrichtung voreilenden Leiterschenkel 6.1 eines der oberen Leiterelemente 6 mit einem voreilenden Leiterschenkel 5.1 eines der unteren Leiterelemente 5 verbinden.

Die Leiterverbindung der dritten Art verbindet einen nacheilenden Leiterschenkel 5.1 eines der unteren Leiterelemente 5 mit einem nacheilenden Leiterschenkel 6.1 eines der oberen Leiterelemente 6. Umgekehrt kann die Leiterverbindung der dritten Art auch einen bezüglich einer bestimmten Umfangsrichtung nacheilenden Leiterschenkel 6.1 eines der oberen Leiterelemente 6 mit einem nacheilenden Leiterschenkel 5.1 eines der unteren Leiterelemente 5 verbinden.

Die Reihenfolge dieser drei Arten von Leiterverbindungen innerhalb einer der Abfolgen ist beliebig, jedoch bleibt diese Reihenfolge in den folgenden sich wiederholenden Abfolgen gleich.

Zwischen den über eine Leiterverbindung 11 verbundenen Leiterschenkeln ist jeweils die gleiche Schrittweite vorgesehen, beispielsweise nach Fig.7 die Schrittweite von sechs Nuten.

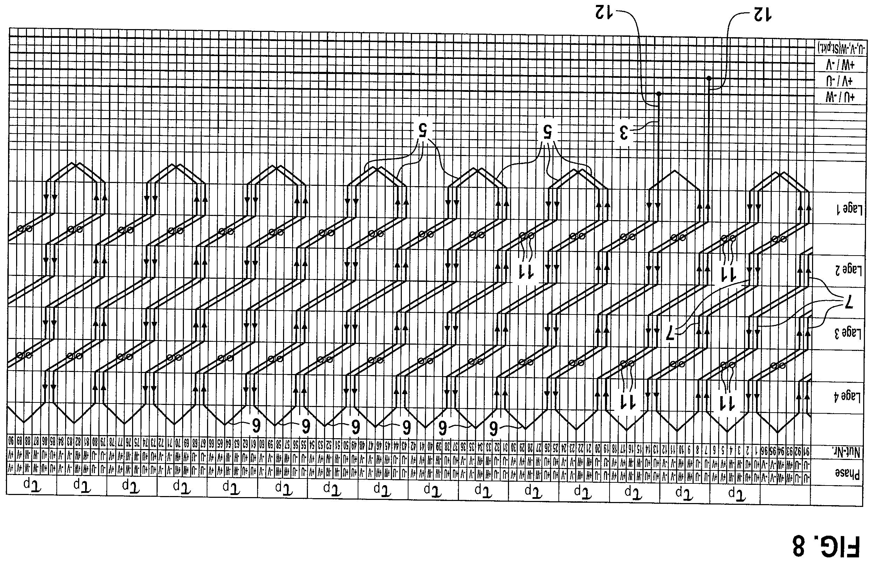

Fig.8 zeigt ein Wickelschema nach einem zweiten Ausführungsbeispiel der erfindungsgemäßen Mehrphasenwicklung nach Fig.1.

Das zweite Ausführungsbeispiel der erfindungsgemäßen Steckwicklung 2 unterscheidet sich von dem ersten Ausführungsbeispiel darin, dass in zumindest einem der Wicklungsstränge 3 zusätzlich zu den unteren Leiterelementen 5 nach Fig.2 und oberen Leiterelementen 6 nach Fig.3 auch mittlere Leiterelemente 7 nach Fig. 4 vorgesehen sind. Dadurch sind nicht zwei Leiter bzw. Leiterschenkel pro Nut, sondern beispielsweise vier, sechs, acht oder zehn Leiter pro Nut 4 vorgesehen, also eine geradzahlige Anzahl von Leitern pro Nut größer als zwei.

Die mittleren Leiterelemente 7 liegen in den jeweiligen Nuten 4 des Stators 1 ausschließlich zwischen der untersten Lage und der obersten Lage. Außerdem führen die Leiterschenkel 7.1 der mittleren Leiterelemente 7 pro Leiterelement 7 einen Lagensprung vom Wert eins aus. Darüber hinaus haben die mittleren Leiterelemente 7 eine Schrittweite, die der größeren der beiden Schrittweiten der oberen und unteren Leiterelemente 5,6 entspricht. Des weiteren weisen die mittleren Leiterelemente 7 nach Fig.4 jeweils zwei in entgegengesetzte Umfangsrichtung abgewinkelte Enden auf.

Nach dem zweiten Ausführungsbeispiel ist zumindest in einem der Wicklungsstränge 3 3 eine sich wiederholende Abfolge von einem einzigen der oberen Leiterelemente 6, einem einzigen oder mehreren der mittleren Leiterelemente 7, einem einzigen der unteren Leiterelemente 5 und einem einzigen oder mehreren der mittleren Leiterelemente 7, oder umgekehrt, vorgesehen. Diese Abfolge kann auch in umgekehrter Reihenfolge der zuvor aufgeführten Leiterelemente 5,6,7 vorgesehen sein. In der einzelnen Abfolge folgt also jeweils auf ein einziges oberes Leiterelement 6 ein einziges oder mehrere mittlere Leiterelemente 7 und ein einziges unteres Leiterelement und anschließend nochmals ein einziges oder mehrere mittlere Leiterelemente 7, oder umgekehrt.

Nach dem zweiten Ausführungsbeispiel in Fig.4 haben die Leiterschenkel 5.1,6.1, die in benachbarten gleichphasigen Nuten 4 in der untersten Lage, also in der Lage 1, angeordnet sind, jeweils einen Verbindungsleiter 5.2,6.2, wobei diese beiden Verbindungsleiter 5.2,6.2 ausgehend von ihren Leiterschenkeln 5.1,6.1 in den benachbarten gleichphasigen Nuten 4 in dieselbe Richtung verlaufen. Außerdem haben die Leiterschenkel 5.1,6.1, die in benachbarten gleichphasigen Nuten 4 in der obersten Lage angeordnet sind, jeweils einen Verbindungsleiter 5.2,6.2, wobei diese Verbindungsleiter 5.2,6.2 ausgehend von ihren Leiterschenkeln 5.1,6.1 in den benachbarten gleichphasigen Nuten 4 in entgegengesetzte Richtung verlaufen.

Umgekehrt kann vorgesehen sein, dass die Verbindungsleiter 5.2,6.2 von Leiterschenkeln 5.1,6.1, die in benachbarten gleichphasigen Nuten 4 in der untersten Lage liegen, ausgehend von ihren Leiterschenkeln 5.1,6.1 in den benachbarten gleichphasigen Nuten 4 in entgegengesetzte Richtung verlaufen, und dass Verbindungsleiter 5.2,6.2 von Leiterschenkeln 5.1,6.1, die in benachbarten gleichphasigen Nuten 4 in der obersten Lage angeordnet sind, in dieselbe Richtung verlaufen.

Nach dem zweiten Ausführungsbeispiel in Fig.8 ist pro elektrischer Phase ausschließlich ein einziger erfindungsgemäßer Wicklungsstrang 3 vorgesehen, der abwechselnd hintereinander angeordnete erste und zweite schlaufenförmig verlaufende Strangabschnitte umfasst, wobei der erste schlaufenförmige Strangabschnitt jeweils durch bestimmte Nuten 4 des Stators 1 verläuft und der nachfolgende zweite schlaufenförmige Strangabschnitt durch die zu den bestimmten Nuten 4 benachbarten Nuten 4 verläuft.

Zwischen den über eine Leiterverbindung 11 verbundenen Leiterschenkeln 5.1,6.1,7.1 ist jeweils die gleiche Schrittweite vorgesehen, beispielsweise nach Fig.8 die Schrittweite von sechs Nuten.

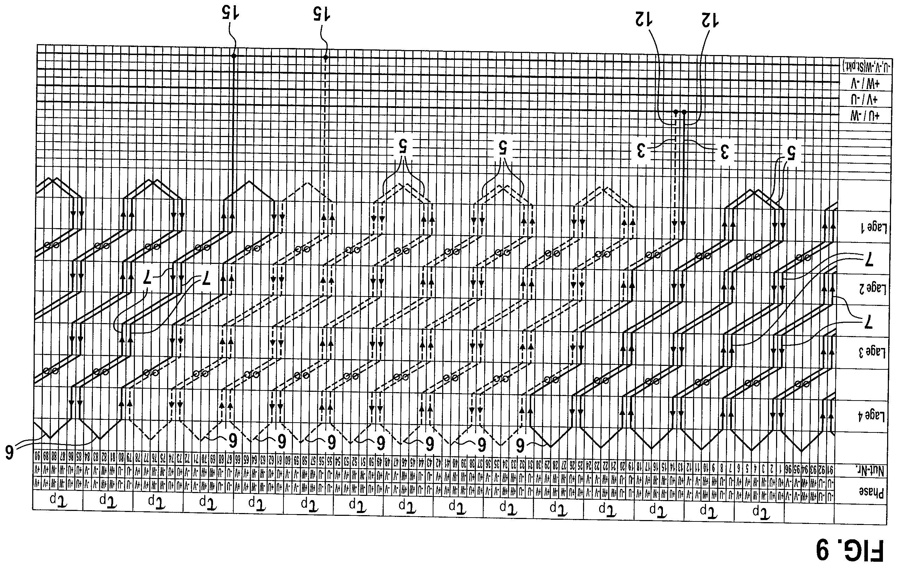

Alternativ können nach Fig. 9 vorgesehen sein, dass der Wicklungsstrang 3, der einer bestimmten elektrischen Phase zugeordnet ist, aus zwei elektrisch parallelen Wicklungszweigen besteht, wobei die Wicklungszweige von ihren Phasenanschlüssen 12 kommend in zwei benachbarten Nuten 4 beginnen und in entgegengesetzter Umfangsrichtung bis zu einem Phasenabgang 15 verlaufen. Dabei ist jeder Wicklungszweig aus einer Vielzahl von elektrisch in Reihe geschalteten Leiterelementen gebildet.

Zwischen den über eine Leiterverbindung 11 verbundenen Leiterschenkeln 5.1,6.1,7.1 ist jeweils die gleiche Schrittweite vorgesehen, beispielsweise nach Fig.9 die Schrittweite von sechs Nuten.

## Patentansprüche

1. Stator (1) für eine elektrische Maschine, welcher eine als Steckwicklung ausgebildete Mehrphasenwicklung (2) aufweist, deren Wicklungsstränge (3) durch Nuten (4) des Stators (1) verlaufen und mehrere unterschiedliche Leiterelemente (5,6,7) umfassen, die jeweils zwei Leiterschenkel (5.1,6.1,7.1) und jeweils einen die zwei Leiterschenkel (5.1,6.1,7.1) verbindenden Verbindungsleiter (5.2,6.2.7.2) aufweisen, wobei
- in jeder Nut (4) eine geradzahlige Anzahl von n Leiterschenkeln (5.1,6.1,7.1) in radialer Richtung bezüglich einer Statorachse (8) übereinander angeordnet ist, wobei jeder Leiterschenkel (5.1,6.1,7.1) eines Leiterelementes (5,6,7) in seiner Nut (4) in einer bestimmten Lage bezüglich eines Nutgrundes (9) der Nut (4) vorgesehen ist, wobei
- die Leiterelemente (5,6,7) derart in den Nuten (4) liegen, dass alle Verbindungsleiter (5.2,6.2.7.2) auf derselben Stirnseite des Stators (1) liegen, wobei
- die den Verbindungsleitern (5.2,6.2.7.2) abgewandten Enden der Leiterschenkel (5.1,6.1,7.1) auf einer Verbindungsseite (10) zur Bildung der Mehrphasenwicklung (2) miteinander verbunden sind, wobei jeweils zwei stoffschlüssig miteinander verbundene Leiterschenkel (5.1,6.1,7.1) eine Leiterverbindung (11) bilden,
- zumindest einer der Wicklungsstränge (3) in einer dem Nutgrund (9) zugewandten untersten Lage liegende untere Leiterelemente (5) und in einer obersten Lage liegende obere Leiterelemente (6) umfasst, wobei
- zwischen den in den Nuten (4) befindlichen Abschnitten der Leiterschenkel (5.1,6.1,7.1), die über einen Verbindungsleiter (5.2,6.2.7.2) oder eine Leiterverbindung (11) miteinander verbunden sind, jeweils eine bestimmte Schrittweite vorgesehen ist, die den Abstand zwischen den Leiterschenkeln (5.1,6.1,7.1) mit der Anzahl der im Stator (1) zu überwindenden Nuten (4) angibt,
**dadurch gekennzeichnet, dass**
die unteren Leiterelemente (5) jeweils in der gleichen Lage liegende Leiterschenkel (5.1) und die oberen Leiterelemente (6) jeweils in der gleichen Lage liegende Leiterschenkel (6.1) aufweisen, wobei die Schrittweite der unteren Leiterelemente (5) gegenüber der Schrittweite der oberen Leiterelemente (6) um den Wert eins verschieden, insbesondere um den Wert eins größer ist.

2. Stator nach Anspruch 1, **dadurch gekennzeichnet, dass** die unteren Leiterelemente (5) jeweils zwei Enden aufweisen, die in die gleiche Umfangsrichtung abgewinkelt sind und die oberen Leiterelemente (6) jeweils zwei Enden aufweisen, die in die gleiche Umfangsrichtung und entgegengesetzt zu den Enden der unteren Leiterelemente (5) abgewinkelt sind.

3. Stator nach einem der Ansprüche 1 oder 2, **dadurch gekennzeichnet, dass** zumindest in einem der Wicklungsstränge (3) eine sich wiederholende Abfolge von einem der oberen Leiterelemente (6) und einem der unteren Leiterelemente (5) vorgesehen ist.

4. Stator nach Anspruch 3, **dadurch gekennzeichnet, dass** die oberen Leiterelemente (6) und die unteren Leiterelemente (5) in dem jeweiligen Wicklungsstrang (3) derart miteinander verbunden sind, dass eine sich wiederholende Abfolge von Leiterverbindungen (11) unterschiedlicher Art entsteht, die zwei aufeinanderfolgende Leiterverbindungen (11.1) einer ersten Art, eine Leiterverbindung (11.2) einer zweiten Art und eine Leiterverbindung (11.3) einer dritten Art umfasst, wobei die Leiterverbindung (11.1) der ersten Art einen voreilenden Leiterschenkel eines der Leiterelemente (5,6,7) mit einem nacheilenden Leiterschenkel eines der anderen Leiterelemente (5,6,7) oder umgekehrt, wobei die Leiterverbindung (11.2) der zweiten Art einen voreilenden Leiterschenkel eines der Leiterelemente (5,6,7) mit einem voreilenden Leiterschenkel eines der anderen Leiterelemente (5,6,7) und wobei die Leiterverbindung (11.3) der dritten Art einen nacheilenden Leiterschenkel eines der Leiterelemente (5,6,7) mit einem nacheilenden Leiterschenkel eines der anderen Leiterelemente (5,6,7) verbindet.

5. Stator nach einem der Ansprüche 1 oder 2, **dadurch gekennzeichnet, dass** zumindest einer der Wicklungsstränge (3) mittlere Leiterelemente (7) umfasst, die in den Nuten (4) zwischen der untersten Lage und der obersten Lage liegen, deren Leiterschenkel (7.1) pro Leiterelement (7) einen Lagensprung vom Wert eins ausführen und die eine Schrittweite haben, die der größeren der beiden Schrittweiten der oberen und unteren Leiterelemente (5,6) entspricht.

6. Stator nach Anspruch 5, **dadurch gekennzeichnet, dass** die mittleren Leiterelemente (7) zwei in entgegengesetzte Umfangsrichtung abgewinkelte Enden aufweisen.

7. Stator nach einem der Ansprüche 5 oder 6, **dadurch gekennzeichnet, dass** zumindest in einem der Wicklungsstränge (7) eine sich wiederholende Abfolge von einem der oberen Leiterelemente (6), einem oder mehreren der mittleren Leiterelemente (7), einem der unteren Leiterelemente (5) und einem oder mehreren der mittleren Leiterelemente (7), oder umgekehrt, vorgesehen ist.

8. Stator nach Anspruch 7, **dadurch gekennzeichnet, dass** innerhalb eines der Magnetpole (τₚ) jeweils zwei benachbarte Nuten (4) vorgesehen sind, die ausschließlich derselben elektrischen Phase (u,v,w) zugeordnete Leiterschenkel (5.1,6.1,7.1) umfassen und gleichphasige Nuten bilden, wobei zwei Leiterschenkel (5.1,6.1,7.1), die in benachbarten gleichphasigen Nuten (4) in der untersten Lage angeordnet sind, Verbindungsleiter (5.2,6.2.7.2) haben, die ausgehend von ihren Leiterschenkeln (5.1,6.1,7.1) in dieselbe Richtung verlaufen, und dass zwei Leiterschenkel (5.1,6.1,7.1), die in benachbarten gleichphasigen Nuten (4) in der obersten Lage angeordnet sind, Verbindungsleiter (5.2,6.2.7.2) haben, die ausgehend von ihren Leiterschenkeln (5.1,6.1,7.1) in entgegengesetzte Richtung verlaufen oder bezüglich der obersten und untersten Lage umgekehrt.

9. Stator nach einem der vorhergehenden Ansprüche, **dadurch gekennzeichnet, dass** pro elektrischer Phase (u,v,w) ausschließlich ein Wicklungsstrang (3) vorgesehen ist, der jeweils mit einem schlaufenförmigen ersten Strangabschnitt durch bestimmte Nuten (4) des Stators (1) verläuft und mit einem nachfolgenden schlaufenförmigen zweiten Strangabschnitt durch die zu den bestimmten Nuten (4) benachbarten Nuten (4) verläuft.

10. Stator nach einem der vorhergehenden Ansprüche, **dadurch gekennzeichnet, dass** der Querschnitt eines Wicklungsstrangs (3) aus mehreren geometrisch parallel verlaufenden, voneinander elektrisch isolierten Teilleiterelementen (5,6,7) gebildet ist.

11. Stator nach Anspruch 10, **dadurch gekennzeichnet, dass** die Teilleiterelemente (5,6,7), insbesondere der oberen Leiterelemente (5,6,7), jeweils von einer Nut (4) eines Magnetpols (τₚ) zur Nut (4) des nächsten Magnetpols (τₚ) die Lagen gegenseitig tauschen.

12. Stator nach einem der vorhergehenden Ansprüche, **dadurch gekennzeichnet, dass** der Wicklungsstrang (3) einer elektrischen Phase aus zwei elektrisch parallelen Wicklungszweigen besteht, die von ihren Phasenanschlüssen (12) kommend in zwei benachbarten Nuten (4) beginnen und in entgegengesetzter Umfangsrichtung bis zu einem Phasenabgang (15) verlaufen.

13. Stator nach einem der vorhergehenden Ansprüche, **dadurch gekennzeichnet, dass** zwischen den über eine Leiterverbindung (11) verbundenen Leiterschenkeln (5.1,6.1,7.1) jeweils die gleiche Schrittweite vorgesehen ist.

14. Elektrische Maschine mit einem Stator nach einem der vorhergehenden Ansprüche.

## Claims

1. Stator (1) for an electric machine, which has a polyphase winding (2) which is formed as a plug winding and whereof the winding strands (3) extend the slots (4) of the stator (1) and comprise a plurality of different conductor elements (5, 6, 7) which each have two conductor limbs (5.1, 6.1, 7.1) and each have a connecting conductor (5.2, 6.2, 7.2) connecting the two conductor limbs (5.1, 6.1, 7.1), wherein
- in each slot (4), an even number of n conductor limbs (5.1, 6.1, 7.1) is arranged one above another in the radial direction with respect to a stator axis (8), wherein each conductor limb (5.1, 6.1, 7.1) of a conductor element (5, 6, 7) is provided in its slot (4) in a specific layer with respect to a slot base (9) of the slot (4), wherein
- the conductor elements (5, 6, 7) lie in the slots (4) in such a way that all connecting conductors (5.2, 6.2, 7.2) lie on the same end face of the stator (1), wherein
- the ends of the conductor limbs (5.1, 6.1, 7.1) which are remote from the connecting conductors (5.2, 6.2, 7.2) are connected to one another on a connecting side (10) to form the polyphase winding (2), wherein, in each case, two conducting limbs (5.1, 6.1, 7.1) connected to one another with material form a conductor connection (11),
- at least one of the winding strands (3) comprises lower conductor elements (5) lying in a bottom layer facing the slot base (9) and upper conductor elements (6) lying in a top layer, wherein
- a specific pitch is provided in each case between those sections of the conductor limbs (5.1, 6.1, 7.1), connected to one another via a connecting conductor (5.2, 6.2, 7.2) or a conductor connection (11), which are located in the slots (4), which pitch represents the spacing between the conductor limbs (5.1, 6.1, 7.1) with the number of slots (4) in the stator (1) which are to receive windings,
**characterized in that**
the lower conductor elements (5) each have conductor limbs (5.1) lying in the same layer and the upper conductor elements (6) each have conductor limbs (6.1) lying in the same layer, wherein the pitch of the lower conductor elements (5) differs from the pitch of the upper conductor elements (6) by the value one, in particular is greater by the value one.

2. Stator according to Claim 1, **characterized in that** the lower conductor elements (5) each have two ends, which are angled in the same circumferential direction and the upper conductor elements (6) each have two ends which are angled in the same circumferential direction and contrary to the ends of the lower conductor elements (5).

3. Stator according to either of Claims 1 or 2, **characterized in that** a repeating sequence of one of the upper conductor elements (6) and one of the lower conductor elements (5) is provided at least in one of the winding strands (3).

4. Stator according to Claim 3, **characterized in that** the upper conductor elements (6) and the lower conductor elements (5) in the respective winding strands (3) are connected to one another in such a way that a repeating sequence of conductor connections (11) of a different type is produced, which sequence comprises two successive conductor connections (11.1) of a first type, a conductor connection (11.2) of a second type and a conductor connection (11.3) of a third type, wherein the conductor connection (11.1) of the first type connects a leading conductor limb of one of the conductor elements (5, 6, 7) to a following conductor limb of one of the other conductor elements (5, 6, 7) or vice versa, wherein the conductor connection (11.2) of the second type connects a leading conductor limb of one of the conductor elements (5, 6, 7) to a leading conductor limb of one of the other conductor elements (5, 6, 7) and wherein the conductor connection (11.3) of the third type connects a following conductor limb of one of the conductor elements (5, 6, 7) to a following conductor limb of one of the other conductor elements (5, 6, 7).

5. Stator according to either of Claims 1 or 2, **characterized in that** at least one of the winding strands (3) comprises centre conductor elements (7), which lie in the slots (4) between the bottom layer and the top layer, whereof the conductor limbs (7.1) for each conductor element (7) realize a layer jump of the value one and which have a pitch which corresponds to the greater of the two pitches of the upper and lower conductor elements (5, 6).

6. Stator according to Claim 5, **characterized in that** the centre conductor elements (7) have two ends which are angled in the opposite circumferential direction.

7. Stator according to either of Claims 5 and 6, **characterized in that** a repeating sequence of one of the upper conductor elements (6), one or more of the centre conductor elements (7), one of the lower conductor elements (5) and one or more of the centre conductor elements (7), or vice versa, is provided at least in one of the winding strands (7) .

8. Stator according to Claim 7, **characterized in that** two adjacent slots (4) are provided in each case within one of the magnetic poles (τₚ), which slots exclusively comprise conductor limbs (5.1, 6.1, 7.1) associated with the same electrical phase (u, v, w) and form in-phase slots, wherein two conductor limbs (5.1, 6.1, 7.1) which are arranged in adjacent in-phase slots (4) in the bottom layer have connecting conductors (5.2, 6.2, 7.2) which extend in the same direction starting from their conductor limbs (5.1, 6.1, 7.1), and **in that** two conductor limbs (5.1, 6.1, 7.1) which are arranged in adjacent in-phase slots (4) in the top layer have connecting conductors (5.2, 6.2, 7.2) which extend in the opposite direction starting from their conductor limbs (5.1, 6.1, 7.1), or vice versa with respect to the top and bottom layer.

9. Stator according to one of the preceding claims, **characterized in that** exclusively one winding strand (3) is provided for each electrical phase (u, v, w), which winding strand extends in each case with a tubular first strand section through specific slots (4) of the stator (1) and with a subsequently tubular second strand section through the slots (4) adjacent to the specific slots (4).

10. Stator according to one of the preceding claims, **characterized in that** the cross section of a winding strand (3) is formed by a plurality of geometrically parallel-extended, mutually electric insulated sub-conductor elements (5, 6, 7).

11. Stator according to Claim 10, **characterized in that** the sub-conductor elements (5, 6, 7), in particular the upper conductor elements (5, 6, 7), switch layers with one another in each case from one slot (4) of a magnetic pole (τₚ) to the slot (4) of the next magnetic pole (τₚ).

12. Stator according to one of the preceding claims, **characterized in that** the winding strand (3) of an electrical phase comprises two electrically parallel winding branches which, stemming from their phase connections (12), start in two adjacent slots (4) and extend in the opposite circumferential direction to a phase outlet (15).

13. Stator according to one of the preceding claims, **characterized in that** the same pitch is provided in each case between the conductor limbs (5.1, 6.1, 7.1) connected via a conductor connection (11) .

14. Electric machine having a stator according to one of the preceding claims.

## Revendications

1. Stator (1) pour une machine électrique, lequel possède un enroulement polyphasé (2) réalisé sous la forme d'un enroulement enfiché, dont les faisceaux d'enroulement (3) s'étendent à travers des rainures (4) du stator (1) et comportent plusieurs éléments conducteurs (5, 6, 7) différents, qui possèdent respectivement deux branches conductrices (5.1, 6.1, 7.1) et respectivement un conducteur de liaison (5.2, 6.2, 7.2) qui relie les deux branches conductrices (5.1, 6.1, 7.1),
- un nombre pair de n branches conductrices (5.1, 6.1, 7.1) étant disposées les unes au-dessus des autres dans chaque rainure (4) dans la direction radiale par rapport à un axe de stator (8), chaque branche conductrice (5.1, 6.1, 7.1) d'un élément conducteur (5, 6, 7) dans sa rainure (4) étant prévue dans une position déterminée par rapport à un fond de rainure (9) de la rainure (4),
- les éléments conducteurs (5, 6, 7) se trouvant dans les rainures (4) de telle sorte que tous les conducteurs de liaison (5.2, 6.2, 7.2) se trouvent du même côté frontal du stator (1),
- les extrémités des branches conductrices (5.1, 6.1, 7.1) qui sont à l'opposé des conducteurs de liaison (5.2, 6.2, 7.2) étant reliées les unes aux autres sur un côté de liaison (10) en vue de former l'enroulement polyphasé (2), deux branches conductrices (5.1, 6.1, 7.1) reliées l'une à l'autre par fusion de matières formant respectivement une liaison conductrice (11),
- au moins l'un des faisceaux d'enroulement (3) comportant des éléments conducteurs inférieurs (5) qui se trouvent dans une position la plus basse faisant face au fond de rainure (9) et des éléments conducteurs supérieurs (6) qui se trouvent dans une position la plus haute,
- une largeur de pas déterminée étant respectivement prévue entre les portions des branches conductrices (5.1, 6.1, 7.1) qui se trouvent dans les rainures (4), lesquelles sont reliées entre elles par le biais d'un conducteur de liaison (5.2, 6.2, 7.2) ou d'une liaison conductrice (11), laquelle indique la distance entre les branches conductrices (5.1, 6.1, 7.1) avec le nombre de rainures (4) à franchir dans le stator (1),
**caractérisé en ce que**
les éléments conducteurs inférieurs (5) possèdent des branches conductrices (5.1) qui se trouvent respectivement dans la même position et les éléments conducteurs supérieurs (6) possèdent des branches conductrices (6.1) qui se trouvent respectivement dans la même position, la largeur de pas des éléments conducteurs inférieurs (5) étant différente de la valeur un, notamment supérieure à la valeur un, par rapport à la largeur de pas des éléments conducteurs supérieurs (6) .

2. Stator selon la revendication 1, **caractérisé en ce que** les éléments conducteurs inférieurs (5) possèdent respectivement deux extrémités qui sont coudées dans la même direction périphérique et les éléments conducteurs supérieurs (6) possèdent respectivement deux extrémités qui sont coudées dans la même direction périphérique à l'opposé des extrémités des éléments conducteurs inférieurs (5).

3. Stator selon l'une des revendications 1 et 2, **caractérisé en ce qu'**une séquence répétitive de l'un des éléments conducteurs inférieurs (5) et de l'un des éléments conducteurs supérieurs (6) se trouve dans au moins l'un des faisceaux d'enroulement (3).

4. Stator selon la revendication 3, **caractérisé en ce que** les éléments conducteurs supérieurs (6) et les éléments conducteurs inférieurs (5) dans le faisceau d'enroulement (3) respectif sont reliés ensemble de telle sorte qu'il se produit une séquence répétitive de liaisons conductrices (11), laquelle comporte deux liaisons conductrices (11.1) successives d'un premier type, une liaison conductrice (11.2) d'un deuxième type et une liaison conductrice (11.3) d'un troisième type, la liaison conductrice (11.1) du premier type reliant une branche conductrice en avance de phase de l'un des éléments conducteurs (5, 6, 7) à une branche conductrice en retard de phase de l'un des autres éléments conducteurs (5, 6, 7) ou inversement, la liaison conductrice (11.2) du deuxième type reliant une branche conductrice en avance de phase de l'un des éléments conducteurs (5, 6, 7) à une branche conductrice en avance de phase de l'un des autres éléments conducteurs (5, 6, 7) et la liaison conductrice (11.3) du troisième type reliant une branche conductrice en retard de phase de l'un des éléments conducteurs (5, 6, 7) à une branche conductrice en retard de phase de l'un des autres éléments conducteurs (5, 6, 7).

5. Stator selon l'une des revendications 1 et 2, **caractérisé en ce qu'**au moins l'un des faisceaux d'enroulement (3) comporte des éléments conducteurs centraux (7), qui se trouvent dans les rainures (4) entre la couche la plus basse et la couche la plus haute, dont les branches conductrices (7.1) effectuent par élément conducteur (7) un saut de position de la valeur un et lesquels possèdent une largeur de pas qui correspond à la plus grande des deux largeurs de pas des éléments conducteurs inférieurs et supérieurs (5, 6).

6. Stator selon la revendication 5, **caractérisé en ce que** les éléments conducteurs centraux (7) possèdent deux extrémités coudées dans une direction périphérique opposée.

7. Stator selon l'une des revendications 5 et 6, **caractérisé en ce qu'**une séquence répétitive de l'un des éléments conducteurs supérieurs (6), d'un ou plusieurs des éléments conducteurs centraux (7), de l'un des éléments conducteurs inférieurs (5) et d'un ou plusieurs des éléments conducteurs centraux (7), ou inversement, se trouve au moins dans l'un des faisceaux d'enroulement (7) .

8. Stator selon la revendication 7, **caractérisé en ce que** deux rainures (4) voisines sont respectivement présentes à l'intérieur de l'un des pôles magnétiques (τₚ), lesquelles comprennent exclusivement des branches conductrices (5.1, 6.1, 7.1) affectées à la même phase électrique (u, v, w) et forment des rainures équiphases, deux branches conductrices (5.1, 6.1, 7.1), qui sont disposées dans des rainures (4) équiphases voisines dans la couche la plus basse, possédant des conducteurs de liaison (5.2, 6.2, 7.2) qui suivent un tracé dans la même direction en partant de leurs branches conductrices (5.1, 6.1, 7.1), et **en ce que** deux branches conductrices (5.1, 6.1, 7.1), qui sont disposées dans des rainures (4) équiphases voisines dans la couche la plus haute, possèdent des conducteurs de liaison (5.2, 6.2, 7.2) qui suivent un tracé dans une direction opposée en partant de leurs branches conductrices (5.1, 6.1, 7.1) ou inversé en référence à la couche la plus haute et la plus basse.

9. Stator selon l'une des revendications précédentes, **caractérisé en ce que** pour chaque phase électrique (u, v, w) est prévu exclusivement un faisceau d'enroulement (3), lequel s'étend respectivement par une première portion de faisceau en forme de boucle à travers des rainures (4) déterminées du stator (1) et s'étend avec une deuxième portion de faisceau en forme de boucle suivante à travers les rainures (4) voisines des rainures (4) déterminées.

10. Stator selon l'une des revendications précédentes, **caractérisé en ce que** la section transversale d'un faisceau d'enroulement (3) est formée par plusieurs éléments conducteurs partiels (5, 6, 7) électriquement isolés les uns des autres qui s'étendent géométriquement en parallèle.

11. Stator selon la revendication 10, **caractérisé en ce que** les éléments conducteurs (5, 6, 7), notamment les éléments conducteurs (5, 6, 7) supérieurs, changent respectivement mutuellement de position d'une rainure (4) d'un pôle magnétique (τₚ) à la rainure (4) du prochain pôle magnétique (τₚ).

12. Stator selon l'une des revendications précédentes, **caractérisé en ce que** le faisceau d'enroulement (3) d'une phase électrique se compose de deux branches d'enroulement électriquement en parallèle qui commencent dans deux rainures (4) voisines à partir de leurs bornes de phase (12) et s'étendent dans une direction périphérique opposée jusqu'à un départ de phase (15).

13. Stator selon l'une des revendications précédentes, **caractérisé en ce que** la même largeur de pas est respectivement présente entre les branches conductrices (5.1, 6.1, 7.1) reliées par le biais d'une liaison conductrice (11).

14. Machine électrique équipée d'un stator selon l'une des revendications précédentes.
